# EUROPEAN PATENT APPLICATION

(11) **EP 2 439 621 A2**
(43) Date of publication of application: **11.04.2012**
(21) Application number: 10764328.0
(22) Date of filing: 15.03.2010
(51) Int. Cl.: G06F 3/042, G06K 7/00

(54) **INFORMATION READING/OUTPUT DEVICE**

(30) Priority: 13.03.2009 JP 2009060897
(71) Applicant: YOSHIDA, Kenji, Bunkyo-ku Tokyo 112-0002 (JP)
(72) Inventor: YOSHIDA, Kenji, Bunkyo-ku Tokyo 112-0002 (JP)
(74) Representative: Gulde Hengelhaupt Ziebig & Schneider
(86) International application number: PCT/JP2010/054354
(87) International publication number: WO 2010/119742

(57) **Abstract**

One piece of code information is associated with a plurality of contents, and a content desired by a user is selected and output to an output device. When the voice recorder 1 of the invention, for example, is turned on by an on-off switch 9 and reads out a dot pattern from a text region "English 1" of an English learning workbook, the voice recorder analyzes the read image, outputs code information, refers to the input code information, and outputs a sound of an English teacher as a content corresponding to mode 1 from a speaker 3. Input of the same code information in mode 2 causes a recorded sound of the learner to be output, and input of the same code information in mode 3 causes the sound of the English teacher and the recorded sound of the learner to be simultaneously played.

## Description

### FIELD OF THE INVENTION

The present invention relates to an information reading/output device that optically reads dot pattern information formed on a printed material and the like, converts the dot pattern information into code information, and outputs a plurality of contents.

### BACKGROUND OF THE INVENTION

Conventionally, there has been an information reading/output device that reads a two-dimensional code printed on a printed material and the like, retrieves and outputs information such as a sound corresponding to this two-dimensional code from a memory. For example, there has been proposed a method of storing information corresponding to given key information in advance in storage means, searching based on a key read out by a code reader, and outputting the information and the like (for example, Japanese Unexamined Patent Application Publication No. 2002-41192). Moreover, there has been proposed a method, in order to output a variety of sound information, of generating a dot code (a dot pattern) in which fine dots are arranged according to a predetermined rule, retrieving a dot code (a dot pattern) printed on a printed material and the like as image data by a camera, digitizing the image data, and outputting sound information (for example, Japanese Unexamined Patent Application Publication No. 2002-366180).

### SUMMARY OF THE INVENTION

### Problems that the Invention is to Solve

However, the method of outputting a sound and the like using the above conventional two-dimensional code has a problem in which the two-dimensional code printed on the printed material and the like is obtrusive. In addition, there has been a problem in which the large two-dimensional code occupies part of the paper surface and, with such a large two-dimensional code, it is impossible to clearly allocate a number of two-dimensional codes to part of texts and sentences or characters and objects having some meaning in images such as photographs, pictures, and graphics in terms of layout.

Further, a sound allocated to a two-dimensional code is static, and only the same sound information is always output when the same two-dimensional code is read out. This is synonymous with that the number of information output from one printed material and the like using one code reader is restricted by the areas of such as the reading region of the code reader, the printed region of the two-dimensional code, the printable region of the printed material. For example, if the number of two-dimensional codes printable on one piece of printed material is limited to ten due to the above restrictions, the number of information output using one code reader from this one piece of printed material is also limited to ten. In addition, a plurality of contents comprising not only a sound but also a text, a URL, multimedia and the like, and a variety of instructions cannot be output.

The present invention was devised to solve such problems. That is, the invention aims to propose a mechanism in which a piece of code information is associated with a plurality of contents and a content desired by a user is output. The technical objective of the invention is to provide an information reading/output device that can associate one piece of code information with a plurality of contents, automatically or arbitrary select from the plurality of contents comprising a text, a sound, a URL, multimedia and the like, and a variety of instructions, and output to the output device.

### Means to Solve the Problems

The information reading/output device of the invention employs the following means to solve the above problems.

The information reading/output device of the invention comprises: a storage unit that stores a plurality of contents; a reading unit that optically reads a dot pattern in which code information of either a content code having a content ID and a plurality of subcodes or a mode code corresponding to a content ID and an output mode is defined from a medium surface printed in advance with the dot pattern; a conversion unit that converts the optically read dot pattern into code information of the content code or the mode code; an output mode link table that associates the content ID with the output mode and registers the content ID and the output mode; a control unit that performs control of referring to the content ID, selecting one of the plurality of subcodes based on the output mode registered in the output mode link table, and outputting a content corresponding to the subcode to a predetermined output device, when the dot pattern is converted into the content code; and a mode setting and switching unit that associates the content ID with the output mode and registers the content ID and the output mode into the output mode link table when the dot pattern is converted into the mode code.

According to the above feature, since the information reading/output device of the invention can select and output one content by setting and switching of the output mode even when one content code is associated with a plurality of contents, the number of contents output from one medium is not restricted by the number of dot patterns printable on one medium surface. Further, setting and switching of the output mode can be performed for each content ID.

The information reading/output device of the invention comprises: a link table that associates a content code with a plurality of contents including a text, a sound, a video image, a URL, multimedia and the like and/or a variety of instructions, and with output modes respectively corresponding to the plurality of contents, and registers the content code, the plurality of contents, and the output modes; a storage unit that stores the plurality of contents; a reading unit that optically reads out a dot pattern printed in advance on a medium surface; a conversion unit that converts the optically read dot pattern into code information of either a content code or a mode code; a mode setting and switching unit that sets and switches the output mode based on the mode code and stores the output mode; and a control unit that performs control of reading out the link table associated with the content code, selecting at least one content from the plurality of contents registered in the link table based on the output mode stored in the mode setting and switching unit, and outputting the content to a predetermined output device.

According to the above feature, since the information reading/output device of the invention can select and output one content by setting and switching of the output mode even when one content code is associated with a plurality of contents, the number of contents output from one medium is not restricted by the number of dot patterns printable on one medium surface.

It is preferable that: the conversion unit further converts the dot pattern read out by the reading unit into coordinate information; the link table registers predetermined coordinate information instead of the content code by associating with the plurality of contents; the control unit further controls output of a content by searching the predetermined coordinate information, that is registered in the link table, at the position closest to the coordinate information within a predetermined distance, and selecting at least one content from the plurality of contents associated with the predetermined coordinate information based on the output mode stored in the mode setting and switching unit.

It is preferable that the link table and/or the storage unit are set in a predetermined server on a network.

It is preferable that the link table comprises the first subtable that stores contents by registering order of the plurality of contents, Japanese alphabetical order, English alphabetical order, or an order that sorts out the contents by defining the details and attributes as modes according to a predetermined method, and the first subtable registers the plurality of contents by sorting the plurality of contents according to any one of the orders; the conversion unit further converts the dot pattern read out by the reading unit into an order code; and the control unit, instead of the output mode stored by the mode setting and switching unit, selects one order from the subtable in accordance with the order code, and further controls an order of outputting the plurality of contents according to the selected one order.

It is preferable that the link table further comprises the second subtable to which the plurality of contents are sorted and registered according to output time and predetermined elapsed time; the control unit comprises a timer that measures reading time during which the reading unit reads out a dot pattern and predetermined elapsed reading time, and controls output by referring to the reading time or the elapsed reading time and the output time or the predetermined elapsed time of the second subtable and selecting at least one content sorted in the second subtable.
It is preferable that the link table further comprises a third subtable in which the one code information is divided into a plurality of subcodes and the plurality of contents are associated with the plurality of subcodes respectively and registered; the control unit controls of outputting a selection screen of the plurality of contents on a display unit by referring to the output mode or the third table, selecting at least one content corresponding to the one subcode from the third subtable according to any one of instructions input by the input unit that receives instructions from a user, and outputting the content to a predetermined output device.

It is preferable that the control unit controls simultaneous output of at least two contents.

It is preferable that the link table registers content output instruction information that instructs an order of outputting the plurality of contents by associating with the content code and output mode as one of the variety of instructions; and the control unit controls of outputting to a predetermined output device according to an order of outputting the plurality of contents based on the output instruction information.
It is preferable that the mode setting and switching unit, instead of the mode code, sets, switches, and stores the output mode according to the instruction input by the input unit that receives instructions from users.

It is preferable that the storage unit stores a text, a sound, a video image, a URL, multimedia and the like and/or a variety of instructions input by the input unit that receives instructions from a user as a new content; and the information reading/output device further comprises a link unit that newly registers the new content to the link table by associating with an output mode and one content code converted by the conversion unit from a dot pattern read out by the reading unit when the storage unit stores the new content.

### ADVANTAGEOUS EFFECT OF THE INVENTION

According to the invention, by proposing a mechanism in which one code information is associated with a plurality of contents and a content desired by a user can be output, it is possible to provide an information reading/output device that can associate one piece of code information with a plurality of contents, select from the plurality of contents comprising a text, a sound, a URL, multimedia and the like, and a variety of instructions, and output to the output device.

### BRIEF DESCRIPTION OF THE DRAWINGS

Figs. 1A and 1B are diagrams showing external structures of the voice recorder of the embodiment.
Fig. 2 is a diagram showing a circuit structure of the voice recorder.
Fig. 3 is a diagram for illustrating the dot pattern.
Figs. 4A and 4B are diagrams for illustrating the dot pattern.
Figs. 5A and 5B are diagrams for illustrating the dot pattern.
Fig. 6 is a diagram for illustrating the dot pattern.
Figs. 7A to 7C are diagrams for illustrating the dot pattern.
Figs. 8A to 8D are diagrams for illustrating the dot pattern.
Fig. 9 is a diagram showing a table 1 for switching modes.
Fig. 10 is a diagram showing a table 2 showing the relationship between code information and sound information.
Fig. 11 is a diagram showing an example of a medium on which dot patterns are superimposed and printed.
Fig. 12 is a flowchart for illustrating reading operation using the voice recorder.
Fig. 13 is a diagram showing a table in which one content code is linked to a plurality of modes.
Fig. 14 is a diagram showing an English learning workbook.
Fig. 15 is a block diagram showing a system structure of a scanner and a computer according to another embodiment of the invention.
Fig. 16 is a diagram showing a link table that links one content code to a plurality of contents.
Fig. 17 is a diagram showing an output instruction board to be read by the scanner.
Fig. 18 is a diagram showing a printed condition of the surface of a map (a medium).
Fig. 19 is a diagram showing a structural example of a coordinate information link table.
Fig. 20 is a diagram showing a structural example of a subtable.
Fig. 21 is a diagram for illustrating a configuration in which code information is divided into a plurality of content codes and contents are linked to respective codes.
Figs. 22A to 22C are diagrams for illustrating a method of linking contents to content codes.
Fig. 23 is a diagram for illustrating a method of linking contents to content codes.
Fig. 24 is a diagram for illustrating a method of linking contents to content codes.
Figs. 25A to 25E are diagrams for illustrating a method of independently switching output modes for each content code.
Figs. 26A to 26D are diagrams for illustrating a method of independently switching output modes for each content code.
Figs. 27A to 27D are diagrams for illustrating the formats of codes for newly registering a correspondence of content ID and output mode.

### MODE FOR CARRYING OUT THE INVENTION

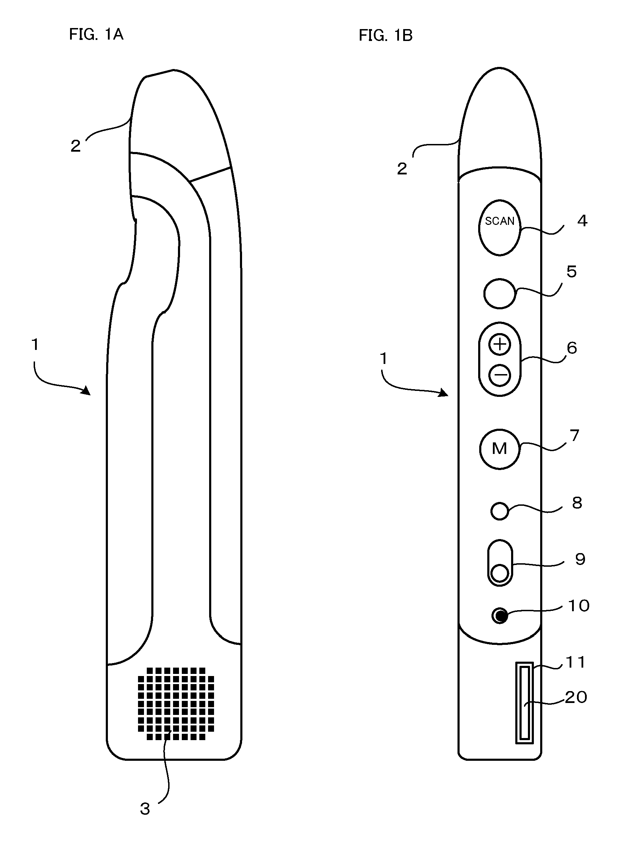

Figs. 1A and 1B show external views of a voice recorder (information reading/output device) 1 incorporating the scanner of the invention.

Fig. 1A shows a side view of the voice recorder 1, where a sensor unit 2 is incorporated at the leading end (superior end in Fig. 1A) and can read a dot pattern as described later. Also, a speaker 3 is provided on the side surface of the voice recorder 1, which allows to display content information and output a sound.

Fig. 1B shows a front view (an operation panel) of the voice recorder 1, where a scanning button 4, a record button 5, a volume 6, a mode setting and switching button 7, an LED 8, an on-off switch 9, a microphone 10 and a card insertion slot 11 are arranged respectively.

The scanning button 4 is a button that is pressed for reading a dot pattern from a picture book, a photograph, a magazine and the like printed with the dot pattern, or linking to a content.

The record button 5 is a button that is pressed to record a sound.

The volume 6 is used to adjust sound volume when outputting sound information.

The mode setting and switching button 7 is a button that is pressed to set a mode or switch modes.

The LED 8 is lit (flashes) when the voice recorder 1 is operating.

The on-off switch 9 is a switch to turn on/off the power of the voice recorder 1.

The microphone 10 is to record a sound.

In the card insertion slot 11, a memory card 20 incorporating an IC chip as a memory is inserted. It should be noted that the memory card 20 has contact-type electrodes (not shown) configuring a signal pin and a power pin and is connected to the connector (not shown) of the voice recorder 1. It should be noted that a non-contact wireless communication type RFID card may also be inserted. Moreover, instead of such a memory card 20, a standard type memory card, such as an SD card (i.e., a registered trademark name), a miniSD card (i.e., a registered trademark name), a memory stick (i.e., a registered trademark name), a memory stick DUO (i.e., a registered trademark name), may also be used.

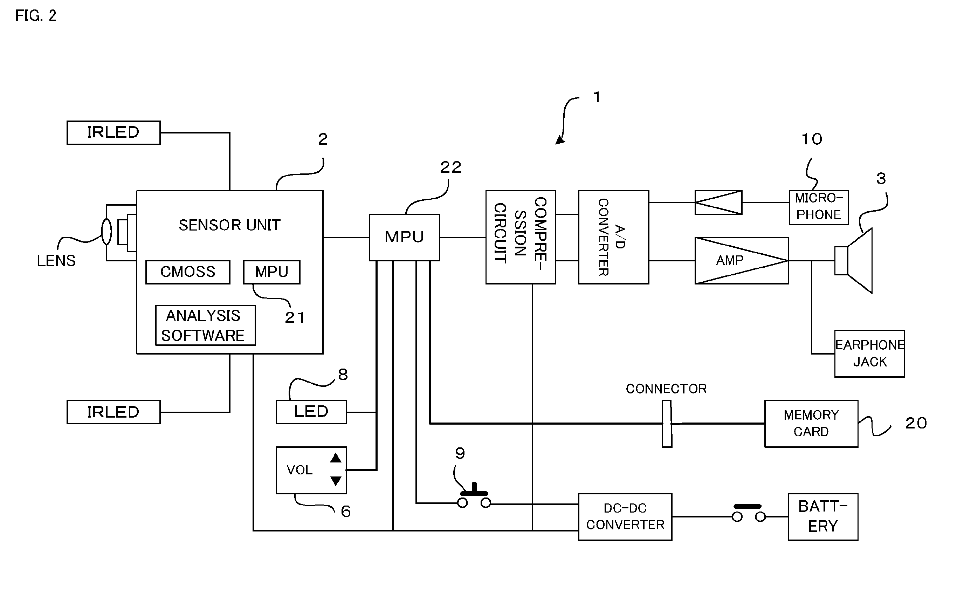

Fig. 2 shows a circuit structure of the voice recorder 1.

First, a CMOS imaging element (CMOSS) is arranged in the sensor unit 2, irradiation light from LEDs (IRLED) irradiates the printed surface of the dot pattern, the reflection light thereof is received as light of wavelength of only an infrared region after going through the visible light filter (not shown), the reflection light is captured by the CMOS imaging element, the captured image is analyzed by the micro processing unit (MPU) 21 and transmitted to the micro processing unit (MPU) 22 as code information (32-bit dot code) or coordinate information of the analysis result.

It should be noted that analysis software is stored in ROM and the like in the sensor unit 2, and the micro processing unit 21 performs analysis processing of the captured image (processing of recognizing a dot pattern and converting the dot pattern into code information and X and Y coordinate values) by reading the software from the ROM.

When reproducing sound information, the micro processing unit 22 reads digital sound information through the connector from the memory card (a storage unit) 20, reverse-compresses (extracts) by the compression circuit, converts into analog information by the A/D converter and outputs from the speaker 3 through the amplifier (AMP). It should be noted that the speaker 3 is equipped with an earphone jack so that the reproduced sound can be heard using an earphone or a headphone.

Also, the sound information input by the microphone 10 by the control of the micro processing unit 22 is processed by the A/D converter and the compression circuit via the amplifier, and stored in the memory card 20 as digital sound information via the connector.

It should be noted that the micro processing unit 22 is connected to the volume 6 and the LED 8 as described above and controls the volume 6 and the LED 8 respectively.

Also, the drive current of the voice recorder 1 is provided to the sensor unit 2, the micro processing unit 22, the compression circuit, and the amplifier (AMP) from the battery through the DC-DC converter.

Reading of a medium printed with the dot pattern by the above-described voice recorder 1 will be described.

The dot pattern on the medium surface is printed with a carbon ink or a stealth ink (invisible ink) that absorbs infrared light. Other part than the dot pattern is printed with an ink having a characteristic of reflecting or transmitting infrared light such as a non-carbon ink. It should be noted that if an infrared transmitting ink is used, the transmitted infrared light is reflected off the medium surface, transmitted through the ink again and captured by the CMOS imaging element.

As the carbon ink and stealth ink (invisible ink) has a characteristic of absorbing infrared light, the image captured by the CMOS imaging element shows the dot portion in black as the CMOS imaging element cannot receive reflection light only from the dot portion.

Here, while a case of using the dot pattern printed with a carbon ink and a stealth ink (invisible ink) using infrared light as irradiation light is described in this embodiment, the characteristics of irradiation light and inks are not limited to this case, and, for example, ultraviolet light and light of particular frequency and an ink having a characteristic of absorbing ultraviolet light or of changing light property may be used to print a dot pattern.

In the image of the dot pattern read out in this way, code information (code value) and/or coordinate values are calculated by the dot pattern analysis program that runs on the micro processing unit 21 in the voice recorder 1.

It should be noted that, while not shown in the drawings, the voice recorder 1 may, in addition to reading of the dot pattern, select the stored sound file by pressing a scroll button such as the one equipped in conventional voice recorders and sound players, and reproduce the selected sound file by pressing a play button.

Next, the dot pattern printed on a medium and code information are described.

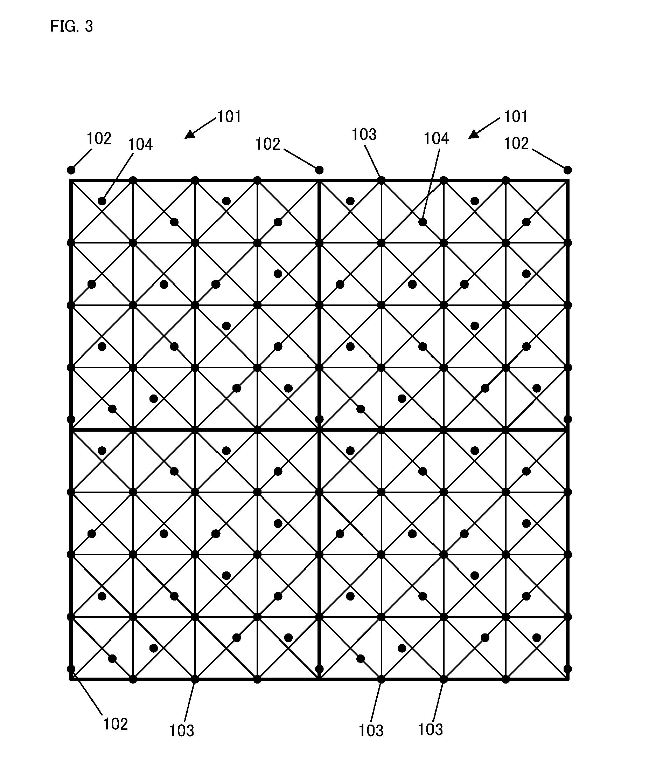

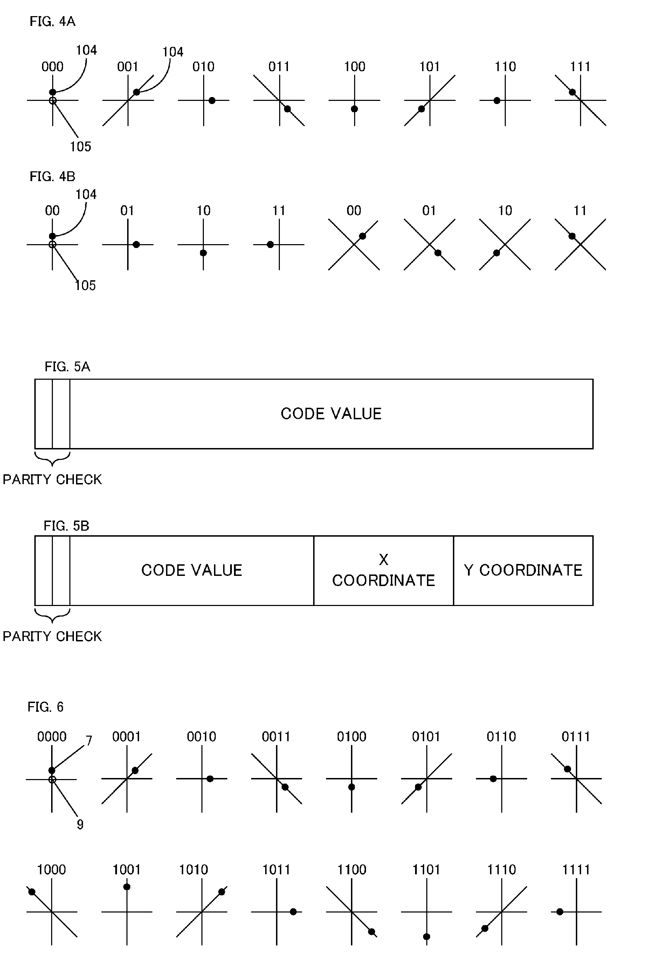

Fig. 3 is an enlarged view showing an example of the arrangement of key dots 102, reference grid point dots 103, and information dots 104 of the dot pattern 101. Figs. 4A and 4B are explanatory views showing information dots 104 that represent information and coding of the information dots 104.

The information inputting and outputting method using a dot pattern comprises methods of: generating a dot pattern 101; recognizing the dot pattern 101; analyzing the dot pattern 101; and outputting the information and program. That is, the micro processing unit 21 retrieves the dot pattern 101 as an image captured by the CMOS imaging element of the sensor unit 2, extracts reference grid point dots 103 according to the analysis software, extracts a key dot 102 based on the fact that there is no dot at the position where the reference grid point dot 103 is supposed to be and a dot is arranged at a position shifted in a predetermined direction therefrom, and identifies one block of the dot pattern 101 and the direction.

Next, the micro processing unit 21 extracts an information dot 104 surrounded by four reference grid point dots 103 or key dots 102, encodes the information dot 104 according to a predetermined algorithm, decodes the collection of information dots 104 into predetermined code values and/or coordinate values based on the arrangement of the information dots 104 in one block of the dot pattern 101, and transmits these code values and/or coordinate values to the micro processing unit 12.

To generate the dot pattern 101, based on a dot code generation algorithm, fine dots used for recognition of vector information, including at least a key dot 102, a reference grid point dot 103, and an information dot 104, are arranged according to a predetermined rule.

As shown in Fig. 3, in a block of the dot pattern 101, 5 × 5-reference grid point dots 103 are arranged, and information dots 104 that represent vector information are arranged around a virtual central point 105 which is surrounded by four reference grid point dots 103 or reference grid points.

It should be noted that the arrangement and structure of the block are defined by the key dot 102. In this embodiment, the key dot 102 is a dot that is not arranged on the reference grid point at one corner of the block but arranged by being shifted in a predetermined direction therefrom, and the key dot 102 defines the size of the block as well as the direction of the block, that is, the dot pattern 101. This block defines arbitrary numerical information.

It should be noted that the example of Fig. 3 shows a state in which four blocks (in bold frames) of the dot pattern 101 are arranged in parallel. However, it will be appreciated that the dot pattern 101 is not limited to four blocks. It should be noted that the key dot 102 may be arranged anywhere inside or outside the block without being limited to the corner of the block.

When this dot pattern 101 is scanned by the sensor unit 2 as image data, the dot code analysis algorithm can correct a distortion of the arrangement of a reference grid point dot 103 attributable to a distortion of the lens of the sensor unit 2, skewed imaging, expansion and contraction of a paper surface, curvature of a medium surface, and distortion during printing.

Specifically, a function for calibration (Xn, Yn) = f(Xn', Yn') to convert distorted four reference grid point dots 103 into the original square or rectangular is calculated, then the vector information is calculated from the correct information dots 104 by calibrating the information dots 104 using the same function.

The information dot 104 is a dot used for recognition of a variety of vector information. The information dot 104 is arranged within one block of the dot pattern 101 configured by a key dot 2. The information dot 104 is also arranged at the ending point of a vector with the starting point being a virtual central point 105 surrounded by four reference grid point dots 103.

For example, this information dot 104 is surrounded by four reference grid point dots 103 or reference grid points. As shown in Fig. 4A, since a dot away from the virtual central point 105 has direction and length as expressed by a vector, the dot can express 3 bits by being disposed in eight directions by rotating by 45 degrees in a clockwise direction. Therefore, one block of the dot pattern 101 may express 3 bits × 16 = 48 bits.

Fig. 4B is a method of encoding one information dot 104 in 2 bits in the dot pattern 101 of Fig. 3. The dots are shifted in + direction and × direction and each encoded in 2 bits, expressing 2 bits × 16 = 32 bits. In this way, although 48-bit numerical information can be indeed defined in one block of the dot pattern 101, data may be allocated to each 32 bits by dividing for intended purposes. Maximum of 2¹⁶ (approx. 65,000) arrangement patterns of information dots can be realized depending on the combination of + direction and × direction.

It should be noted that information dot arrangement patterns are not limited to these, and the dots may be arranged in a variety of directions and encoding may be changed including a possibility of encoding in 4 bits by arranging the dots in 16 directions.

Preferably, the dot diameters of a key dot 102, a reference grid point dot 103, and an information dot 104 are in the range of approximately 0.03 to 0.06 mm in consideration of the visual quality, paper property, printing accuracy, the resolution of a sensor unit 2, and optimal digitalization.

Moreover, in consideration of information amount required for an imaging area and possible false recognition of dots 102, 103, and 104, a distance between reference grid point dots 103 is preferably in the range of approximately 0.3 to 0.6 mm in both vertical and horizontal directions. Displacement of the key dot 102 is preferably around 20% of the grid distance, taking into account the possible false recognition with the reference grid point dots 103 and information dots 104.

A distance between this information dot 104 and a virtual central point 105 surrounded by four reference grid point dots 103 is preferably the distance of around 15-30% of the gap between an adjacent reference grid point dot 103 and the virtual central point 105. If the gap between an information dot 104 and a virtual central point 105 is shorter than this distance, the reference grid point 103 and information dot 104 are easily recognized as a cluster, and are ugly as a pattern of the dot pattern 101.

On the other hand, if the gap between an information dot 104 and a virtual central point 105 is smaller than this distance, recognition of in which direction the information dot 104 having vector information is located with respect to the virtual central point 105 becomes difficult.

As shown in Fig. 3, one dot pattern 101 is a dot pattern 101 configured by 4 × 4 block regions, and two-bit information dot 104 is arranged in each block.

Figs. 5A and 5B show dot code formats of one block of the dot pattern 101 configuring a collection of information dots 104.

As shown in Fig. 5A, parity check and a code value are recorded in one dot pattern 101.

In Fig. 5B, parity check, a code value, X and Y coordinate values are recorded. It should be noted that the dot code format can be arbitrary defined.

Fig. 6 is an example showing information dots 104 having vector information and another embodiment of encoding of the information dots 104. As in this example, if two types of information dots 104, long and short distance from a virtual central point 105 surrounded by reference grid point dots 103 or reference grid points are used, and vector directions are eight directions, 4 bits can be encoded. Here, the long distance is preferably about 25-30% of the gap between adjacent virtual central points 105. The short distance is preferably about 15-20% of the gap between adjacent virtual central points 105. However, a distance between the centers of long and short distance information dots 104 is preferably longer than the diameters of these information dots 104 to prevent false recognition.

The information dot 104 surrounded by four reference grid point dots 103 or reference grid points is preferably one dot, taking into account the visual quality, as, if there are a plurality of information dots 104, adjacent dots are easily recognized as a cluster and a pattern is generated. However, if visual quality is disregarded and information amount should be increased, one bit may be encoded using one vector and an information dot 104 may be expressed with a plurality of dots, thereby including voluminous information.

For example, in eight direction concentric vectors, 0 to 8 information dots 104 surrounded by four reference grid point dots 103 or reference grid points can encode 8 bits, 16 vectors of eight direction double concentric circles can encode 16 bits by arranging 0 to 16 information dots 104 in one block.

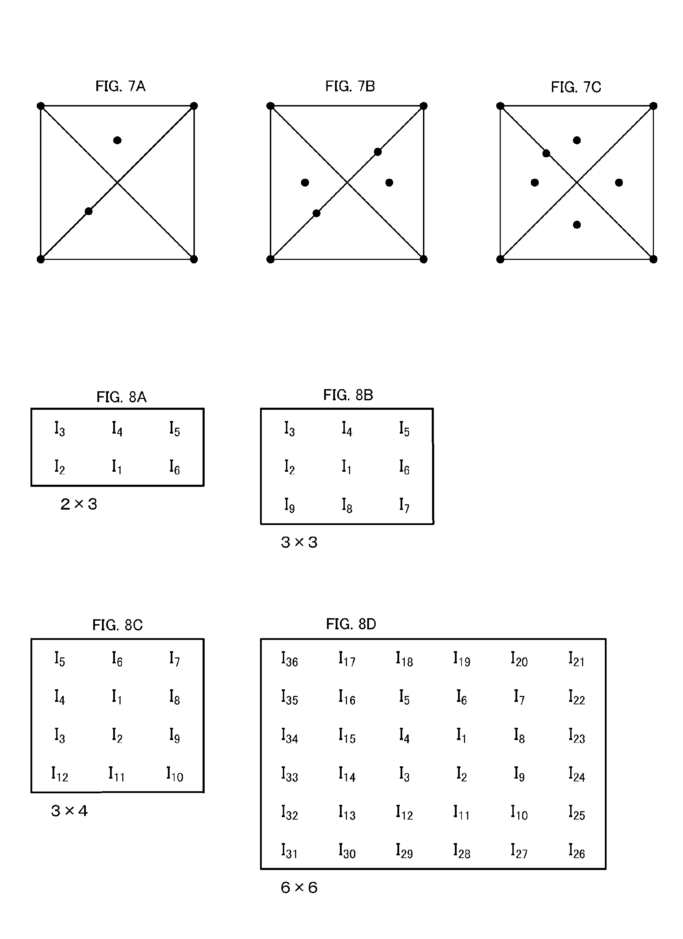

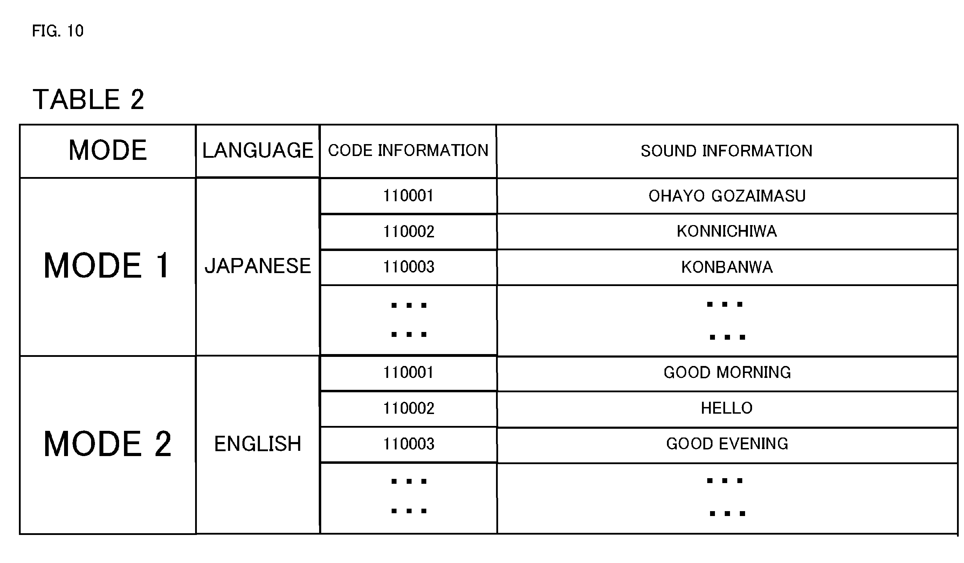

Figs. 7A to 7C are examples of information dots 104 of 16 vectors in eight direction double concentric circles and encoding thereof. Fig. 7A is a diagram of disposing two information dots 104; Fig. 10B is a diagram of disposing four information dots 104; and Fig. 10C is a diagram of disposing five information dots 104.

Figs. 8A to 8D are variants of the dot pattern 101. Fig. 8A is a schematic view of arranging six square or rectangular regions, each configured by four reference grid point dots 103 or reference grid points that surround an information dot 104; Fig. 8B is a schematic view of arranging nine of the regions; Fig. 8C is a schematic view of arranging 12 of the regions; and Fig. 8D is a schematic view of arranging 36 of the regions. One block of the dot pattern is repeatedly arranged in vertical and horizontal directions within one or arbitrary region. While arbitrary numerical information is defined in the block, when X and Y coordinate values are defined, blocks arranged in X and Y coordinate directions store incremented X and Y coordinate values.

The dot pattern 101 shown in Fig. 3 illustrates an example where 16 (4 × 4) information dots 104 are arranged in one block. However, this information dot 104 is not limited to 16-dot arrangement in one block, and can vary. For example, as shown in Figs. 7A to 8D, regions configured by four reference grid point dots 103 or reference grid points that surround an information dot 104 and encoding of the information dot 104 defined by the region may be modified in a variety of ways.

In this invention, code information is used as a content code defined as corresponding to a plurality of contents including a text, a sound, a video image, a URL, multimedia and the like, and a variety of instructions.

Second, the code information is used as a mode code for switching output modes. Here, the output mode collectively means a processing required for selecting at least one content from a plurality of contents allocated to a content code and outputting the content.

Third, the code information is used as coordinate information that means X and Y coordinate values in a region where a dot pattern is printed.

Fourth, the code information means an order code indicating the output order of a plurality of contents in a subtable that registers any of orders among: registering order of a plurality of contents; Japanese alphabetical order; English alphabetical order; and an order that sorts out the contents by defining the details and attributes as modes according to a predetermined method (the details will be described later).

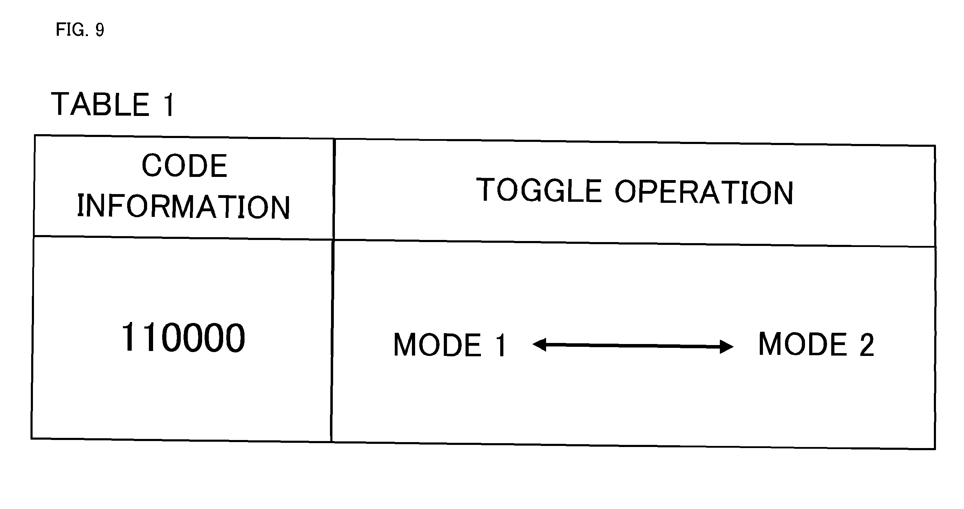

Figs. 9 and 10 show tables for reading out sound information using code information stored in a memory card 20 in advance (the details will be described later).

Fig. 9 shows a table 1 for setting modes. If a mode code "110000" is read out by the voice recorder 1, the output mode is switched from mode 1 to mode 2. If a mode code "110000" is read out again, the output mode is switched from mode 2 to mode 1. Each time the mode code "110000"is read out, mode 1 and mode 2 are set one after another (a toggle operation). Once the mode is set, the setting state is stored.

Fig. 10 shows a table 2 for selecting a content, and the language of the sound information becomes Japanese in output mode 1. For example, if the input code information is "110001," "Ohayogozaimasu" in Japanese is output as sound, and if the input code information is "110002," "Kon-nichiha" in Japanese is output as sound.

On the other hand, the language of sound information becomes English in output mode 2. For example, if the input code information is "110001," "Good Morning" in English is output as sound, and if the input code information is "110002," "Hello" in English is output as sound.

That is, even the same content code is read out, the content to be output can be selected by setting and switching the output mode.

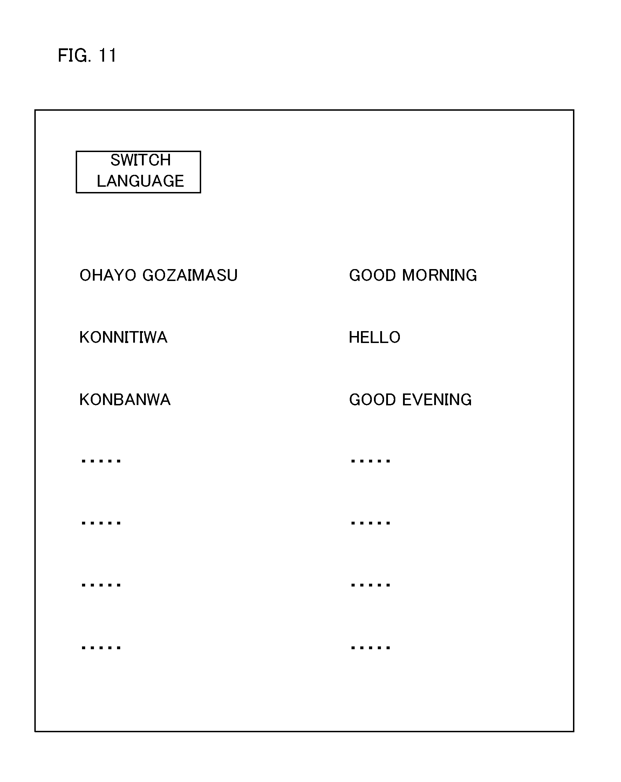

Fig. 11 shows an example of printing on a medium, where a dot pattern signifying code information corresponding to a text is superimposed and printed on a text region. The dot pattern is not shown in Fig. 11 as the dot pattern cannot be seen with naked eyes, the region printed with "Switch Language" in Fig. 11 is superimposed and printed with a dot pattern signifying a mode code, and the regions printed with "Ohayogozaimasu" in Japanese, "Good morning" in English, "Kon-nichiha" in Japanese, "Hello" in English, "Konbanwa" in Japanese, and "Good evening" in English are superimposed and printed with three pairs of dot patterns signifying different content codes including: a pair of "Ohayogozaimasu" and "Good morning," a pair of "Kon-nichiha" and "Hello," and a pair of "Konbanwa" and "Good evening."

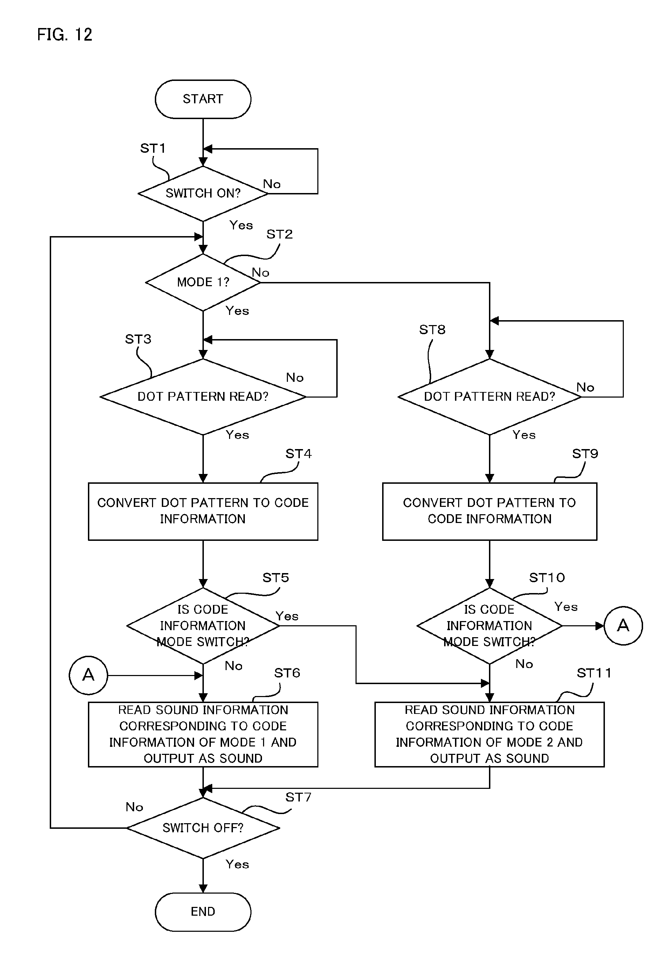

Next, reading operation using the voice recorder 1 will be described with reference to the flowchart of Fig. 12 in such a configuration.

When the on-off switch 9 is turned on (step 1), the micro processing unit 22 checks whether the setting of output mode is mode 1 or not (step 2). If the output mode is mode 1, the processing proceeds to step 3, and, if the mode is mode 2, the processing proceeds to step 8.

If the processing proceeds to step 3 in mode 1, when the micro processing unit 21 reads out a dot pattern from a medium by the sensor unit 2 (step 3), the micro processing unit 21 converts the dot pattern into code information according to the analysis software and outputs to the micro processing unit 22 (step 4).

When the code information input by referring to a table 2 stored in a memory card 10 is "110000," as such code information is a mode code, the micro processing unit 22 switches from mode 1 to mode 2 (step 5).

If the code information is not "110000"at step 5, as such code information is a content code, the micro processing unit 22 reads out sound information corresponding to the content code in mode 1 and outputs a sound from a speaker 3 (step 6). For example, if the code information is "110001," "Ohayogozaimasu" in Japanese is output as sound. In such a case, as the same dot pattern is superimposed and printed on the text region "Ohayogozaimasu" and the text region "Good morning" as shown in Fig. 11, whether the text region "Ohayogozaimasu" or the text region "Good morning" is read, "Ohayogozaimasu" in Japanese is output as sound.

Also, if the processing is mode 2 at step 2 and proceeds to step 8, when a dot pattern is read out from a medium by the sensor unit 2 (step 8), the micro processing unit 21 converts the dot pattern into code information according to the analysis software and outputs to the micro processing unit 22 (step 9).

When the code information input by referring to a table 2 stored in a memory card 20 is "110000," as the code information is a mode code, the micro processing unit 22 switches from mode 2 to mode 1 (step 10).

If the code information is not "110000"at step 10, as such code information is a content code. Thus, the micro processing unit 22 reads out sound information corresponding to the content code in mode 2 and outputs a sound from the speaker 3 (step 11). For example, if the code information is "110001," "Good Morning" in English is output as sound. In such a case, as the same dot pattern is superimposed and printed on the text region "Ohayogozaimasu" and the text region "Good Morning" as shown in Fig. 11, whether the text region "Ohayogozaimasu" or the text region "Good Morning" is read, "Good Morning" in English is output as sound.

Here, if the on-off switch 9 is turned off (step 7), the power of the voice recorder 1 becomes off.

As described above, by registering different sound information (contents) to mode 1 and mode 2 of one content code, the different sound information (for example, English and Japanese) can be output by setting and switching the output modes.

Next, another embodiment will be described.

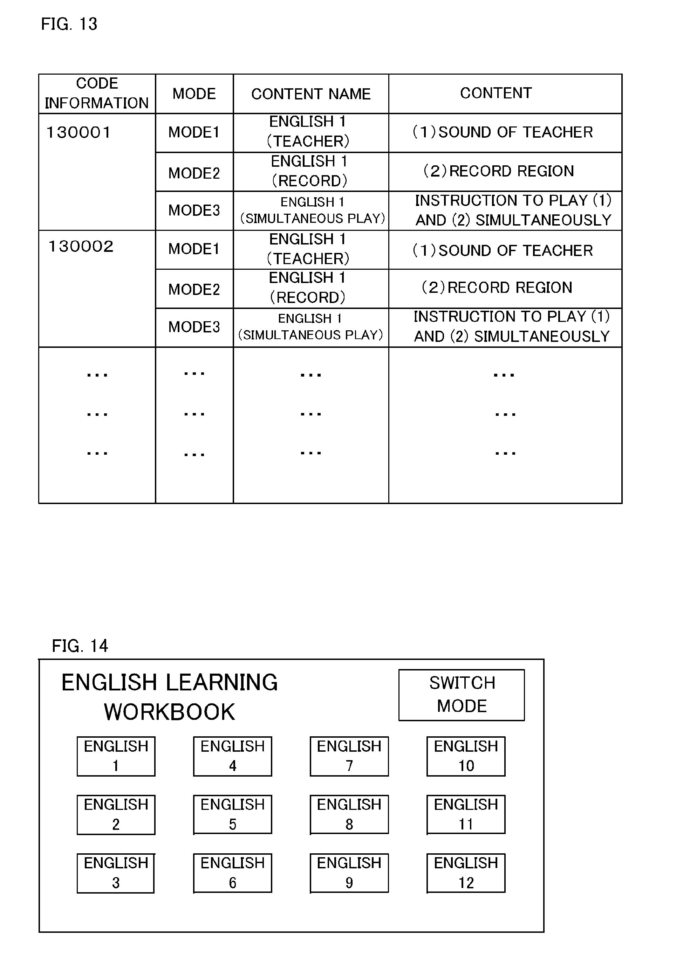

Fig. 13 shows a table that is stored in advance in a memory card 30 that is not shown in the drawings and has a different memory content from the memory card 20. For example, the memory card 30 is provided with a link table for English learning.

Fig. 14 shows an example of a printed medium as an English learning workbook used for learning English. Code information as mode code (for example, "130000") is printed as a dot pattern in the text region of "Switch mode" for switching modes located at the upper right portion of the English learning workbook. The text region "English 1"is printed with a dot pattern of code information"130001"as a content code. "English 2"and others are alike.

In Fig. 13, when the mode is mode 1, content code "130001"plays a sound of a teacher as an example of an English sentence of English 1. When the mode is mode 2, the sound of recorded learner's own voice is played. When the mode is mode 3, the sound of the teacher and the sound of the learner's own voice are simultaneously or consecutively played.

Here, the following describes a use example using the voice recorder 1 that is inserted with a memory card 30 of an English learner and the English learning workbook.

First, the learner switches on the on-off switch 9 of the voice recorder 1 (mode 1 is set as default), and causes the voice recorder 1 to read a dot pattern from the text region "English 1"of the workbook.

The micro processing unit 21 of the voice recorder 1 executes analysis processing of the read image (processing of recognizing a dot pattern, and converting the dot pattern into code information or X and Y coordinate values) and outputs the content code "130001" to the micro processing unit 22.

The micro processing unit 22 refers to a table of Fig. 13 using the input content code "130001," and outputs the sound of a teacher for English 1 as a content corresponding to mode 1 from the speaker 3.

Next, the leaner wears a headphone by plugging in the headphone (not shown) to the earphone jack, and causes the voice recorder 1 to read the dot pattern again from the text region "English 1"of English learning workbook. At the same time, the learner presses the record button 5 and pronounces the English sentence toward the microphone 10 together with the sound of the teacher for English 1 heard through the headphone.

Here, the micro processing unit 22 stores sound information of the leaner from the microphone 10 in the record region provided corresponding to the content code 130001 of the memory card 30, and newly registers to the link table. Linking of contents to content codes using linking means will be described in details. There are several methods for linking the contents to the content codes.

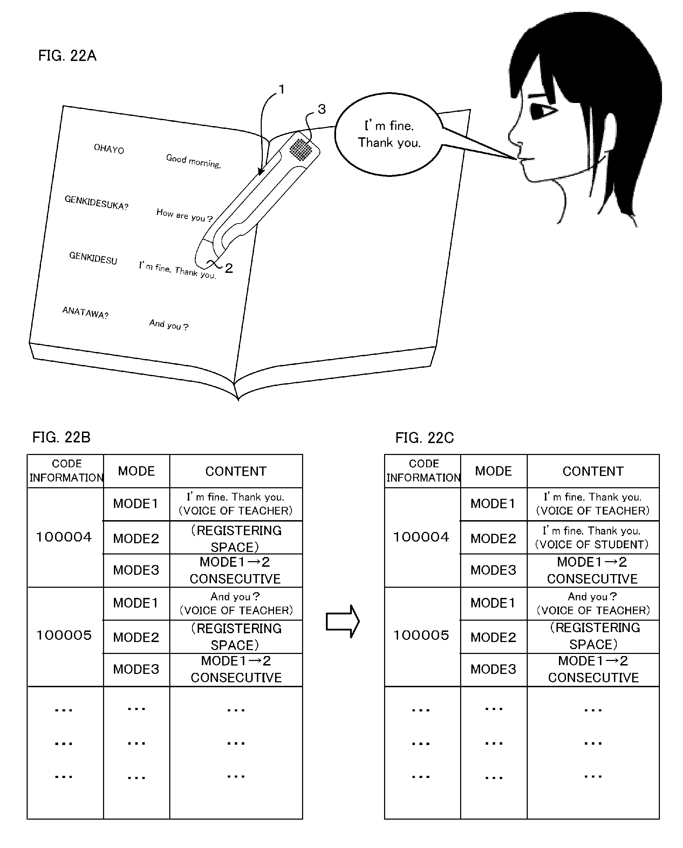

Figs. 22A to 22C are diagrams showing the first linking method among the above linking methods. The first linking method is to start recording of a sound of a user himself/herself "I'm fine. Thank you." with the voice recorder 1 as shown in Fig. 22A to store the sound in storage means not shown in Fig. 22A, and touch a dot pattern with the voice recorder 1, thereby linking the sound of the user "I'm fine. Thank you." to a content corresponding to output mode "2" of the content code "100004" that is blank as a registering space as shown in Fig. 22B,

There are several patterns of methods for operations of starting and finishing of recording with the voice recorder 1.

First, there is a method in which a user starts recording a sound of the user by pressing the record button 5 of the voice recorder 1 not shown in the drawings, and finishes recording by touching the dot pattern after recording the sound of the user to link the content code defined by the dot pattern to the recorded sound file.

Second, there is a method in which a user starts recording a sound by pressing the record button 5 of the voice recorder 1, presses the record button 5 again to finish recording, and touches the dot pattern with the voice recorder 1 within predetermined time (e.g., 10 seconds) to link the content code defined by the dot pattern to the recorded sound file.

Third, there is a method in which a user touches a dot pattern with the voice recorder 1 during playing or within predetermined time (e.g., 10 seconds) after finishing playing a sound file recorded in advance in the voice recorder 1 to link the content code defined by the dot pattern to the recorded sound file.

It should be noted that, while the above configuration relates to a voice recorder, the information reading/output device of the invention is not limited to the voice recorder and can be implemented in a variety of ways.

For example, it will be appreciated that the scanner of the invention may be connected to or incorporated in a video camera, and an image captured by the video camera may be linked to the content code using the above variety of methods, or the scanner of the invention may be connected to a personal computer, and a URL being browsed by the personal computer may be linked to the content code.

Alternatively, when using a personal computer, apart from the above variety of linking methods, there may be used a second linking method in which a link table that links contents to content codes by an application program on the personal computer is created.

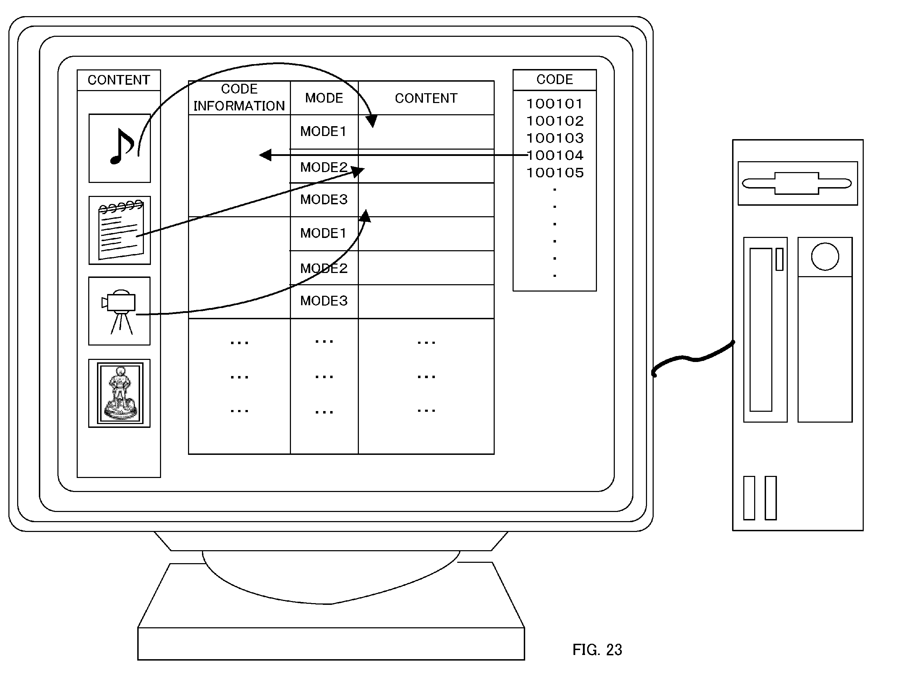

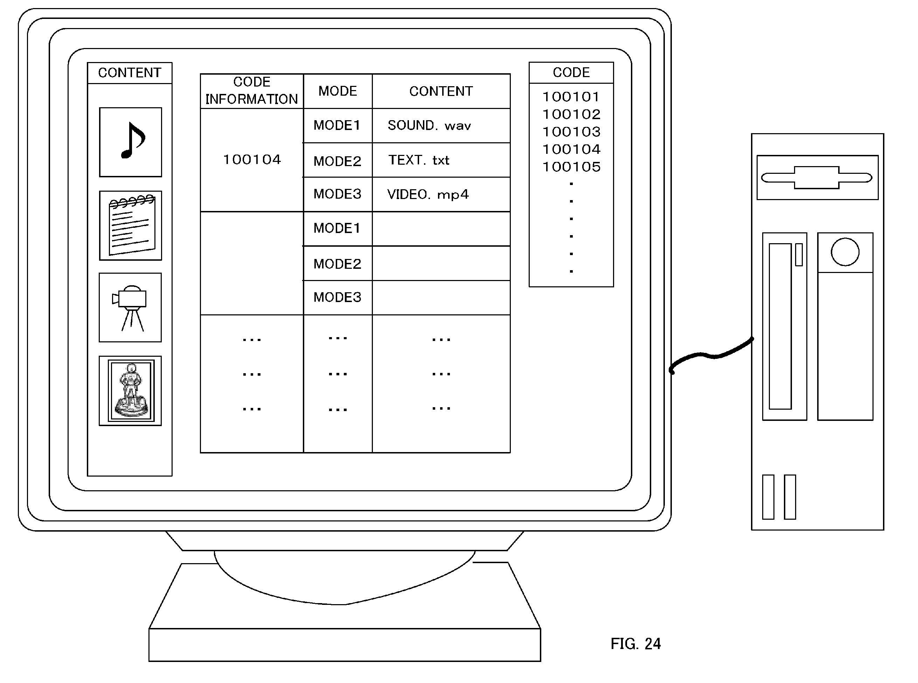

Figs. 23 and 24 are diagrams illustrating the second linking method that illustrates an application program for creating a link table and executed on a personal computer. Fig. 23 is a diagram showing how the application is executed. Fig. 24 is a diagram showing a link table created by executing the application program.

As shown in Fig. 23, when the application program for creating a link table is started up, an icon for displaying each content stored in advance in the computer (including an address indicating a content on a network) is displayed on the left side of the screen on the display device (DISP), a content code is displayed on the right side of the screen, and the link table is displayed in the middle of the screen (Of course, the layout is not limited to the one described above). A user inserts the displayed content or content code by dragging and dropping to the link table in the middle of the screen by a mouse operation not shown in the drawings.

As the result, a new correspondence of the content and the content code is registered in the link table in the middle of the screen, the content code is displayed in the code field, and the file name of the content is displayed in the content field as shown in Fig. 24.

In this way, a link table can be created on a personal computer using a dedicated application program.

After the recording finishes, the learner switches mode 1 that is set as default to mode 2 by reading a dot pattern of the text region "Switch mode" in the English leaning workbook with the voice recorder 1 or pressing the mode setting and switching button 7 of the voice recorder 1. Then, the learner uses the voice recorder 1 to read out the dot pattern of the text region "English 1"of the English learning workbook.

The micro processing unit 21 outputs a content code "130001" to the micro processing unit 22 by executing analysis processing of the read image (processing of recognizing a dot pattern and converting the dot pattern into code information and X and Y coordinate values).

The micro processing unit 22 refers to a table of Fig. 13 using the input content code "130001," and outputs the stored sound of the learner which is a content corresponding to mode 2 from the speaker 3 or a headphone (not shown).

Further, the learner switches from mode 2 to mode 3 by reading the dot pattern signifying a mode code superimposed and printed on a text region "Switch mode" on the English learning workbook using the voice recorder 1 or by pressing the mode setting and switching button 7 of the voice recorder 1. Then, the learner reads out the dot pattern of the text region "English 1"on the English learning workbook using the voice recorder 1.

The micro processing unit 21 executes analysis processing of the read image (processing of recognizing a dot pattern and converting the dot pattern into code information and X and Y coordinate values) and outputs the content code "130001"to the micro processing unit 22.

The micro processing unit 22 refers to the table of Fig. 13 using the input content code "130001," and outputs the sound of the teacher and the stored sound of the learner which are contents corresponding to mode 3 from the speaker 3 or a headphone (not shown).

As described above, the sound of the teacher or the recorded sound of the user can be played, or the sound of the teacher and the recorded sound of the user can be simultaneously or consecutively played from one content code, depending on the output mode.

It should be noted that a liquid crystal display unit may be provided on the side surface of the voice recorder 1 shown in Fig. 1 and the content name indicated by the link table of Fig. 13 may be displayed thereon.

Also, while not shown in the drawings, by equipping the information reading/output device of the invention with an OCR or a video camera of conventional techniques inside or outside the device in addition to the above-described recording means, multimedia information other than sounds can be input and registered to the link table.

The following describes another embodiment.

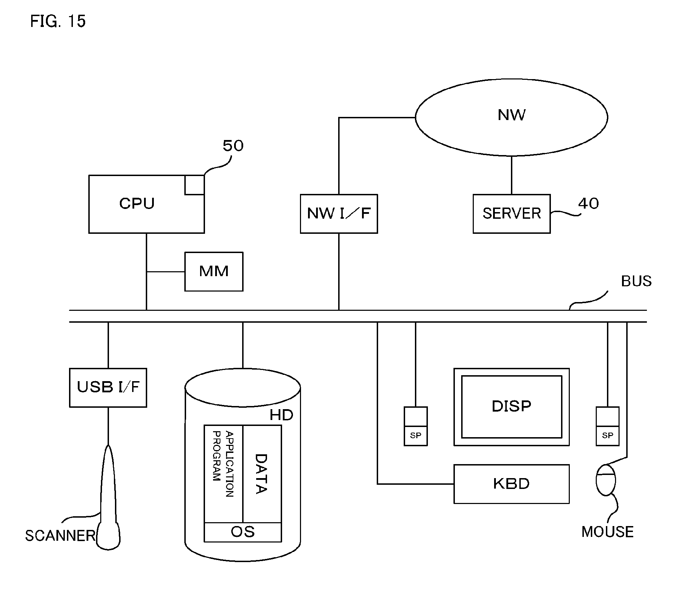

Fig. 15 shows a configuration of a personal computer and a scanner.

As shown in Fig. 15, the personal computer comprises, centering on the central processing unit (CPU), a main memory (MM), and a hard disk device (HD) a display device (DISP), a speaker (SP), a keyboard (KBD), and a mouse connected through a bus. The central processing unit (CPU) has a timer 50 and controls outputting of contents according to time as described later.

Then, the scanner as imaging means is connected through a USB interface (USB I/F).

Also, the bus (BUS) is connected to a general-purpose network (NW) such as the Internet through a network interface (NW I/F). Further, while the details are described later, a plurality of contents can be downloaded from a server 40.

In addition to an operating system (OS), an application program such as a dot pattern analysis program used in the embodiment, data such as electrical map data, text information, image information, sound information, and video information, and a variety of tables are registered in the hard disk (HD).

The central processing unit (CPU) sequentially reads out and executes the application program in the hard disk (HD) through the bus (BUS) and the main memory (MM), as well as reads out data and outputs and displays the data on the display device (DISP).

While not shown in the drawings, the scanner comprises infrared irradiation means (red LED), an IR filter, and an optical imaging element such as a CMOS sensor and a CCD sensor and the like, and has a function of imaging reflection of the irradiation light irradiated on the medium surface. It should be noted that the mode setting and switching button shown in Figs. 1A and 1B may also be provided on the scanner.

Here, the dot pattern on the medium surface is printed with a carbon ink, and the part other than the dot pattern is printed with a non-carbon ink. As this carbon ink has a characteristic of absorbing infrared light, the image captured by the optical imaging element shows only the dot portion in black.

The captured image of the dot pattern read out in this way is analyzed by the micro processing unit (not shown) in the scanner, converted into a content code, and transmitted to the personal computer through a USB cable.

The central processing unit (CPU) of the personal computer refers to a link table (described later) indicating the received content code, and outputs a plurality of contents corresponding to one code information from the display device (DISP) or a speaker (SP).

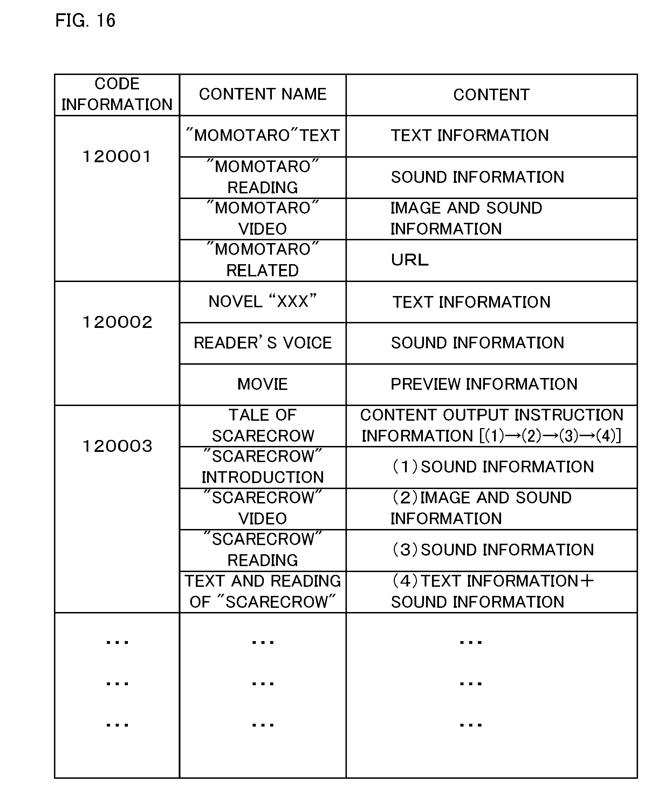

Fig. 16 shows an example of a link table provided in a hard disk (HD), in which a plurality of contents are registered to one content code.

For example, in Fig. 16, one content code "120001" is linked to: content name "'Momotaro' text" and content "text information;" content name "'Momotaro' reading" and content "sound information;" content name "'Momotaro' video" and content "image and sound information;" content name "'Momotaro' related" and content "URL."

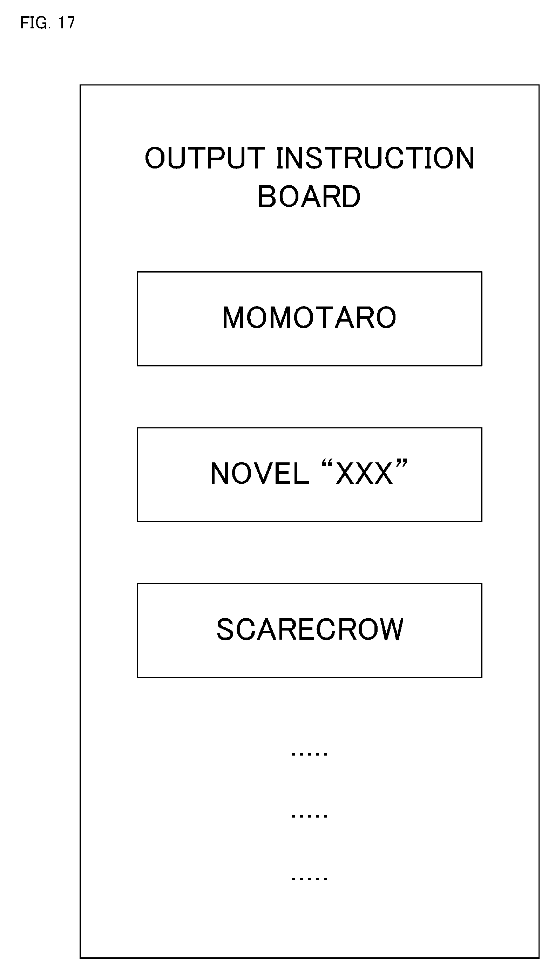

Fig. 17 is an example of "output instruction board" which is a medium for inputting code information to search the above described link table, where dot patterns signifying content codes corresponding to respective texts are superimposed and printed on the text regions.

In Fig. 17, the "Output instruction board" is superimposed and printed with a dot pattern signifying a content code "120001"on a text region "Momotaro," a dot pattern signifying a content code "120002"is superimposed and printed on a text region "Novel 'xxx'," a dot pattern signifying a content code "120003"is superimposed and printed on a text region "Scarecrow," and other text regions are superimposed and printed in a similar way.

Here, when a user uses the scanner to read out the text region "Momotaro" from the output instruction board, the central processing unit (CPU) executes analysis processing of the read image (processing of recognizing a dot pattern and converting the dot pattern into code information and X and Y coordinate values) to obtain a content code "120001." Then, the central processing unit (CPU) refers to a link table of Fig. 16 using the content code "120001," and displays "'Momotaro' text," "'Momotaro' reading," "'Momotaro' video," and "'Momotaro' related" as content names on the display device DISP.

When "'Momotaro' text" displayed on the display device DISP is selected by keyboard (KBD) or mouse operation, the central processing unit CPU refers to the link table and reads out "text information" as a content and displays on the display device DISP. The user can read the text (a tale) of "Momotaro" displayed on the display device DISP by scrolling the display.

When "'Momotaro' reading" displayed on the display device DISP is selected by keyboard (KBD) or mouse operation, the central processing unit CPU refers to the link table and reads out "sound information" as a content and outputs the sound from the speaker SP. The user can hear the sound (a tale) of "Momotaro" from the speaker SP.

When "'Momotaro' video" displayed on the display device DISP is selected by keyboard (KBD) or mouse operation, the central processing unit CPU refers to the link table and reads out "image and sound information" as a content and plays the image on the display device DISP and outputs the sound from the speaker SP. The user can watch the video (a tale) of "Momotaro."

When "'Momotaro' related" displayed on the display device DISP is selected by keyboard (KBD) or mouse operation, the central processing unit CPU refers to the link table, reads out "URL" as a content, connects to a general-purpose network (NW) such as the Internet through a network interface (NW I/F), downloads information related to "Momotaro," and displays on the display device DISP. The user can obtain information related to "Momotaro."

In addition, when "'Momotaro' text" and "'Momotaro' reading" displayed on the display device DISP are selected by keyboard (KBD) or mouse operation and "simultaneous output"(not shown) that was displayed in advance on the display device DISP is further selected, the central processing unit CPU refers to the link table and reads out "text information" as a content corresponding to "'Momotaro' text" and "sound information" as a content corresponding to "'Momotaro' reading." Then, the central processing unit CPU displays "text information" on the display device DISP and simultaneously outputs "sound information" as sound from the speaker SP. The user can read the text (a tale) of "Momotaro" displayed on the display device DISP by scrolling the display device and simultaneously hear the sound (a tale) of "Momotaro" from the speaker SP.

It should be noted that a plurality of content names and a plurality of contents respectively corresponding thereto may be downloaded from the server 40. Alternatively, only plurality of contents may be downloaded from the server.

It should be noted that the above-described contents may be a movie, a music, a drama, a literature, a photograph, a cartoon, an animation, a computer game, and other texts, figures, colors, sounds, videos, or images, or a combination thereof, or information related thereto.

Further, in the link table shown in Fig. 16, one content code "120003"is linked to: content name "Tale of Scarecrow" and content "content output instruction information;" content name "'Scarecrow' introduction" and content "sound information;" content name "'Scarecrow' video" and content "image and sound information;" content name "'Scarecrow' reading" and content "sound information;" and content name "Text and reading of 'Scarecrow'" and content "text information and sound information."

Here, when a user uses the scanner to read out the text region "Scarecrow" from the output instruction board, the central processing unit CPU executes analysis processing of the read image (processing of recognizing a dot pattern and converting the dot pattern into code information and X and Y coordinate values) and obtains a content code "120003." Then, the central processing unit CPU refers to the link table of Fig. 16 using the content code "120003," and displays "Tale of Scarecrow," "'Scarecrow' introduction," "'Scarecrow' video," "'Scarecrow' reading," and "Text and reading of 'Scarecrow'" as content names on the display device DISP.

When "Tale of Scarecrow" displayed on the display device DISP is selected by keyboard (KBD) or mouse operation, the central processing unit CPU refers to the link table and reads out "content output instruction information" as a content. The central processing unit CPU follows this information output instruction and executes the content of "'Scarecrow' introduction" first, then, executes the content of "'Scarecrow' video," the content of "'Scarecrow' reading," and the content of "Text and reading of 'Scarecrow'."

In addition, when "'Scarecrow' introduction" is selected, the central processing unit CPU executes corresponding sound information; when "'Scarecrow' video" is selected, the central processing unit CPU executes corresponding image and sound information; when "'Scarecrow' reading" is selected, the central processing unit CPU executes corresponding sound information; and when "Text and reading of 'Scarecrow'" is selected, the central processing unit CPU executes corresponding text information and sound information.

As described above, since one content code is associated with a plurality of contents, a user can arbitrary select and output a plurality of contents only by reading one content code.

Another embodiment will be described below.

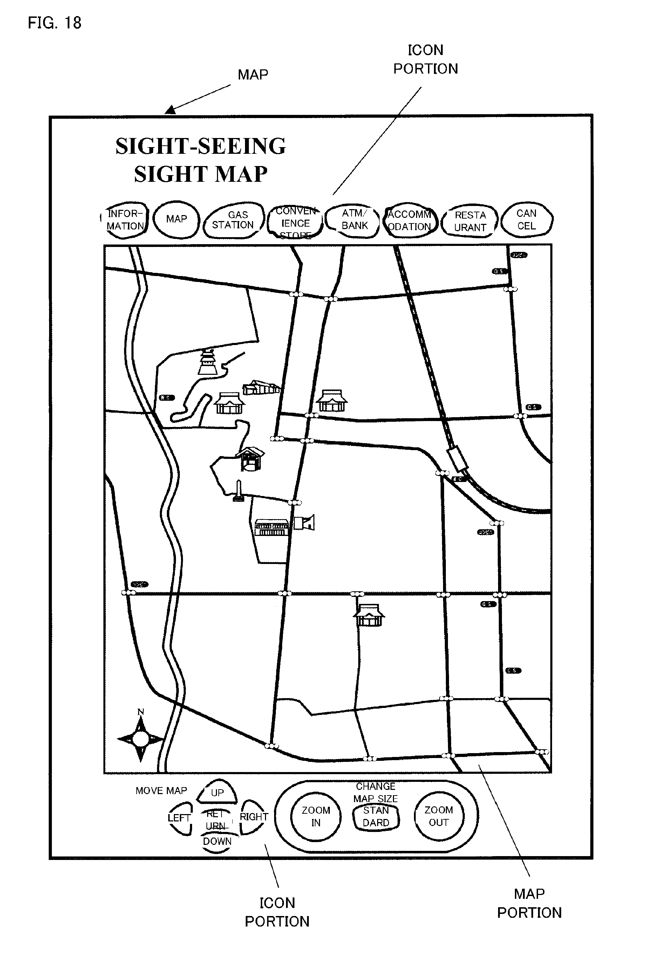

Fig. 18 shows the printed condition of the surface of a map (a medium) used in this embodiment. The map portion in the map is printed with symbols indicating roads, railways, as well as sight-seeing facilities. This map portion region is printed with dot patterns signifying X and Y coordinates corresponding to the positions of the roads and railways.

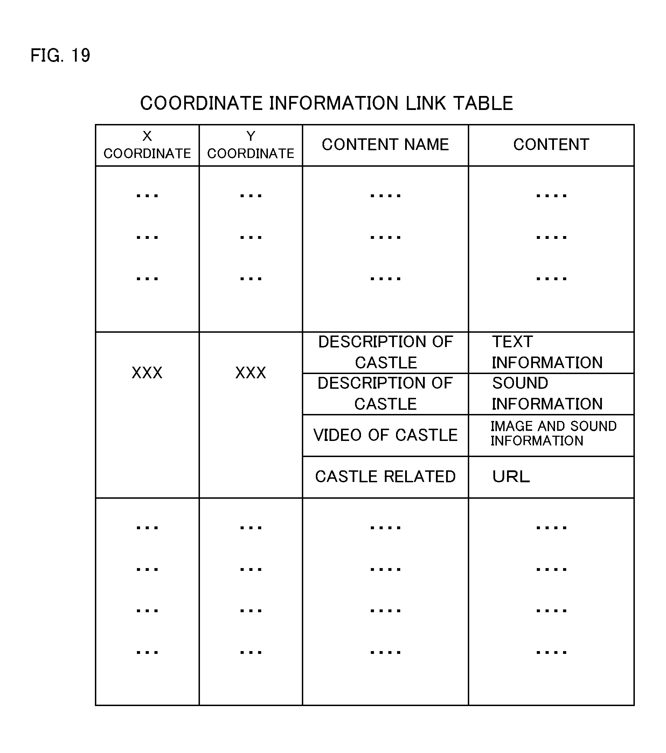

Also, icons outside the map field are respectively superimposed and printed with dot patterns as mode codes. A mode code that switches X and Y coordinate information to an output mode for outputting a video describing a facility is defined in "Information" icon, and a mode code that switches X and Y coordinate information to an output mode for outputting latitude and longitude information is defined in "Map" icon. Fig. 19 shows an example of coordinate information link table provided on the hard disk (HD), which registers a plurality of contents for one piece of coordinate information.

An embodiment of the invention will be described with reference to Figs. 18 and 19. When an icon "Information" outside the map field in Fig. 18 is read out by the scanner, the output mode is switched to "information" mode as described above. When point B on the map is read out by the scanner from this state, the central processing unit CPU executes analysis processing of the read image (processing of recognizing a dot pattern and converting the dot pattern into code information and X and Y coordinate values) and obtains coordinate information (X and Y coordinate values). Then, the central processing unit CPU refers to the coordinate information link table of Fig. 19 using the X and Y coordinate values and outputs X and Y coordinate values closest to the above X and Y coordinate values, that is, a content corresponding to the output mode among a plurality of contents registered in the X and Y coordinate values of the castle. In this case, as the output mode is "information," a video describing the castle is output.

However, selecting the content may be performed b by a user y operating a keyboard (KBD) or a mouse instead of using the output mode.

Another embodiment will be described below.

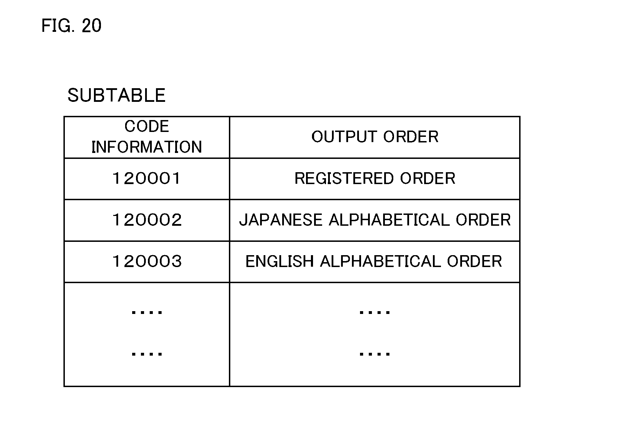

Fig. 20 shows a configuration example of a subtable storing orders of outputting contents respectively corresponding to a plurality of content names that are linked to one order code by the above-described link table.

For example, when the order code is "120001," the order is registered as" registering order." When the order code is "120002," the order is registered as "Japanese alphabetical order." When the order code is "120003," the order is registered as "English alphabetical order."

As described above, the order of outputting the plurality of contents can be instructed by providing the first subtable that registers any of orders among: registering order of a plurality of contents; Japanese alphabetical order; English alphabetical order; and an order that sorts out the contents by defining the details and attributes as modes according to a predetermined method.

In addition, contents may be sorted and registered in a subtable (the second subtable) based on output time or predetermined elapsed time. In such a case, the central processing unit CPU controls output of contents corresponding to content names based on time by using a timer 50 shown in Fig. 15, measuring time when the scanner reads out the dot pattern (reading time), matching the reading time with the output time in the subtable, and selecting the contents sorted to the subtable.

Here, the output time means absolute time, that is, actual time of outputting a content, for example, for evening if the time is in the evening. Also, predetermined elapsed time means elapsed time since starting a program, elapsed time since outputting one of a plurality of contents, or elapsed time since touching the related code information.

Another embodiment will be described below.

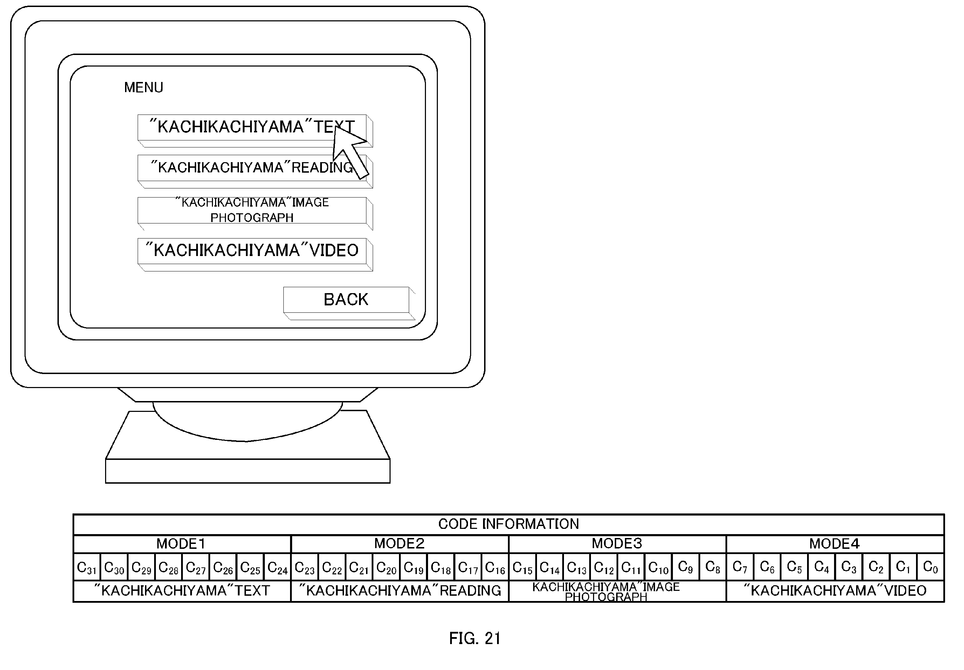

Fig. 21 shows code information defined in 32 bits of dot patterns from C₀ to C₃₁, in which the code information is divided for each predetermined number of bits into a plurality of subcodes, and the contents are allocated to the respective plurality of subcodes to configure a subtable (the third subtable).

If the plurality of subcodes are respectively related to mode codes, or, if mode codes are allocated to subcodes that are divided from one piece of code information, output of the corresponding content can be controlled by setting and switching modes and referring to the same subcode as the mode code. In such a case, the code information, of course, includes content codes as well as subcodes, and at least one content can be selected using the content code & subcode. It will be appreciated that the mode code and the subcode do not necessarily be the same, and by providing a mode code-subcode table, a subcode may be obtained from the present mode, and if there is a corresponding subcode in the code information, a content related to the content code & subcode defined in the code information may be output. If the corresponding subcode does not exist, there may be no reaction, or a sound effect such as beep or a predetermined default content may be output.

While the output modes are common to the content codes and temporarily set in the above description, a unique output mode can also be set in advance for each content code.

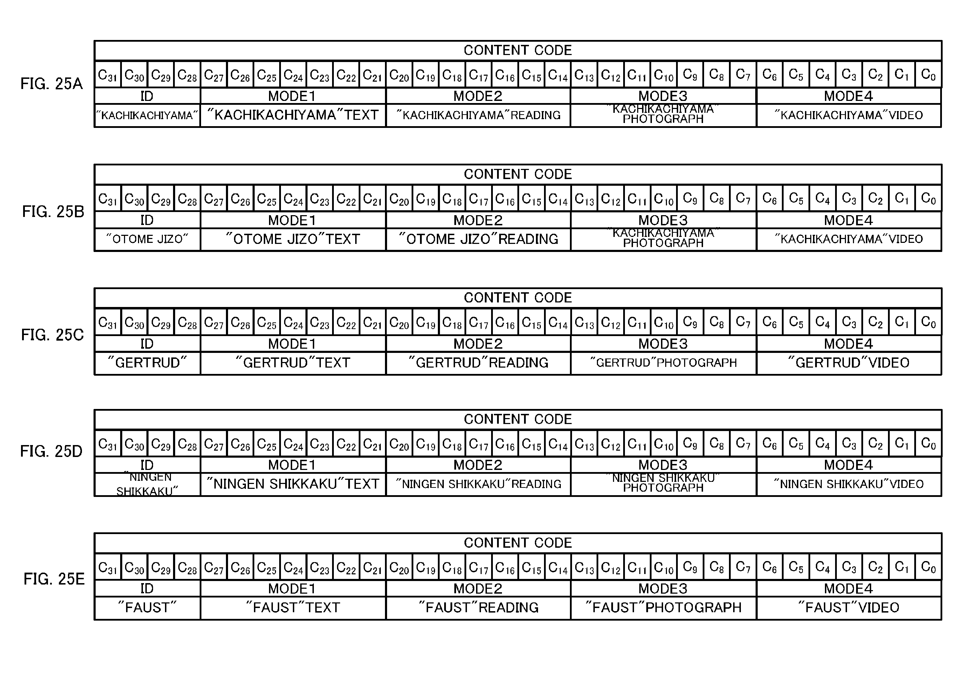

Figs. 25A to 25E are diagrams showing content codes used in this embodiment. As shown in Figs. 25A to 25E, in such content codes, upper 4 bits are defined as a content ID indicating the subject of the content, and the rest 28 bits are divided into four subcodes corresponding to respective contents. When the scanner reads out a dot pattern that defines such a content code, the content ID of upper 4 bits is always analyzed, while only the subcode corresponding to the set mode is selectively analyzed.

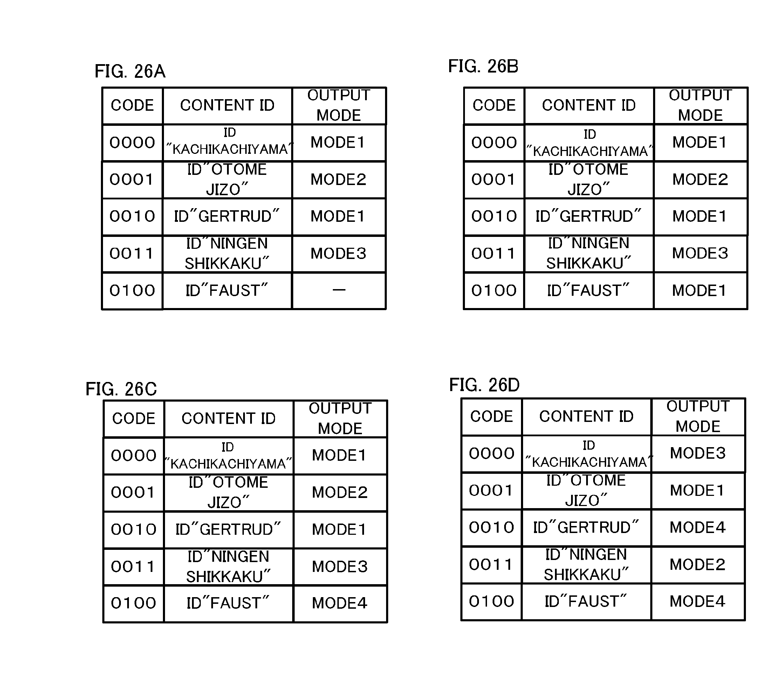

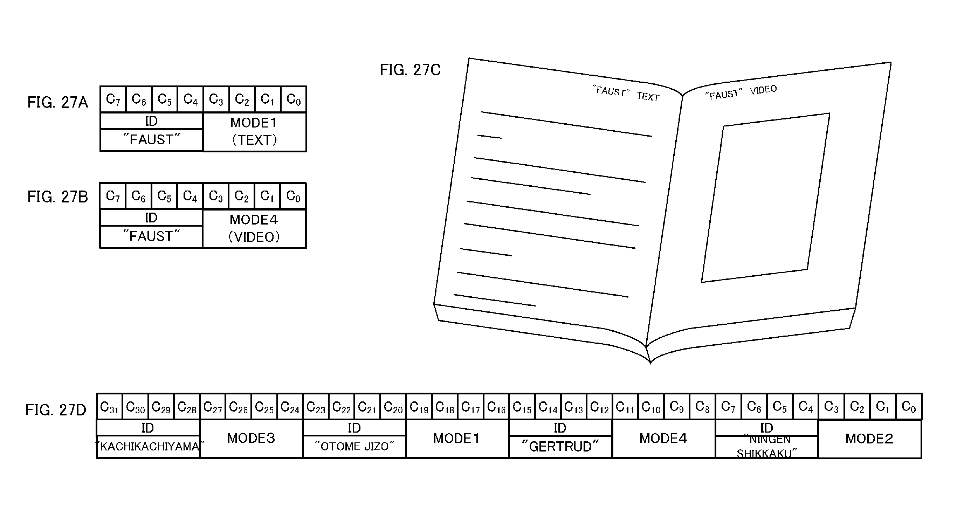

Figs. 26A to 26D are diagrams showing tables that register correspondences of content IDs and output modes for selecting one content from the content codes of Figs. 25A to 25E. Figs. 27A to 27D are diagrams showing a code format for newly registering a correspondence of a content ID and an output mode.

According to the tables of Figs. 26A to 26D, if the upper 4 bits of the content code that was read out by the scanner are 0000 signifying the content ID "Kachikachiyama," as "mode 1"is registered as the output mode corresponding to this content ID, the subcode corresponding to mode 1 in the content code is analyzed and the corresponding information is output. For example, according to the content code of Fig. 25A, subcodes C₂₇ to C₂₁ corresponding to mode 1 are analyzed and the content "'Kachikachiyama'text" is output.

Also, if upper 4 bits of the content code that was read by the scanner are 0100 signifying the content ID "Faust," an output mode corresponding to such a content ID is not registered in the link table of Fig. 26A, and no information is output. In such a case, if a dot pattern, which is not shown, superimposed and printed on the portion indicating "'Faust' text" is read out by the scanner, the mode code defined in this dot pattern is analyzed as shown in Fig. 27A, and the output mode for the content ID "Faust" can be set. As the result, as shown in Fig. 26B, the correspondence of the content ID "Faust" and output mode 1 is newly registered in the link table.

Also, when a dot pattern, which is not shown, superimposed and printed on the portion indicating "'Faust' video " is read out by the scanner, the mode code defined in this dot pattern is analyzed as shown in Fig. 27B, and, in this case, the correspondence is changed to the one of the content ID "Faust" and output mode 4 and registered in the link table.

Further, as shown in Fig. 27D, correspondences of a plurality of content IDs and output modes may be changed by reading a dot pattern. In such a case, as shown in Fig. 26D, correspondences of a plurality of content IDs and output modes are changed in accordance with the format of Fig. 27D.

The central processing unit CPU shown in Fig. 15 refers to the above-described subtable provided on the hard disc (HD), displays content names on the display device DISP as options of a plurality of contents, and, when a content name is selected by a user, reads and outputs a content corresponding to the selected content name from the hard disc (HD).

It should be noted that, in the above embodiments, it may be possible to form a subtable by allocating a plurality of contents to respective divided plurality of content codes.

While principal embodiments of the invention are described so far, it goes without saying that the invention can be modified and implemented by combining the above embodiments as necessary. For example, it is possible to combine the embodiment described in Fig.13 and the embodiment described in Fig. 20 or the embodiment described in Fig. 21 and register a voice of a user himself/herself as a content to the link table by associating with a content code and an order code or a subcode.

### Industrial Applicability

The information reading/output device of the invention has industrial applicability firstly as study materials for learning foreign languages, and secondly for serving for publications such as a picture book that makes sounds.

### Description of Reference Numerals and Signs

1 VOICE RECORDER
2 SENSOR UNIT
3 SPEAKER
4 SCANNING BUTTON
5 RECORD BUTTON
6 VOLUME
7 MODE SETTING AND SWITCHING BUTTON
9 ON-OFF SWITCH
10 MICROPHONE
20 MEMORY CARD (STORAGE UNIT)
21 MICRO PROCESSING UNIT (MPU)
22 MICRO PROCESSING UNIT (MPU)
40 SERVER
50 TIMER
CPU CENTRAL PROCESSING UNIT
MM MAIN MEMORY
USB I/F USB INTERFACE
HD HARD DISC
DISP DISPLAY DEVICE (DISPLAY UNIT)
NW NETWORK

## Claims

1. An information reading/output device comprising:
a storage unit that stores a plurality of contents;
a reading unit that optically reads a dot pattern in which code information of either a content code having a content ID and a plurality of subcodes or a mode code corresponding to a content ID and an output mode is defined from a medium surface printed in advance with the dot pattern;
a conversion unit that converts the optically read dot pattern into code information of the content code or the mode code;
an output mode link table that associates the content ID with the output mode and registers the content ID and the output mode;
a control unit that performs control of referring to the content ID, selecting one of the plurality of subcodes based on the output mode registered in the output mode link table, and outputting a content corresponding to the subcode to a predetermined output device, when the dot pattern is converted into the content code; and
a mode setting and switching unit that associates the content ID with the output mode and registers the content ID and the output mode into the output mode link table when the dot pattern is converted into the mode code.

2. An information reading/output device comprising:
a link table that associates a content code with a plurality of contents including a text, a sound, a video image, a URL, multimedia and the like and/or a variety of instructions, and with output modes respectively corresponding to the plurality of contents, and registers the content code, the plurality of contents, and the output modes;
a storage unit that stores the plurality of contents;
a reading unit that optically reads out a dot pattern printed in advance on a medium surface;
a conversion unit that converts the optically read dot pattern into code information of either a content code or a mode code;
a mode setting and switching unit that sets and switches the output mode based on the mode code and stores the output mode; and
a control unit that performs control of reading out the link table associated with the content code, selecting at least one content from the plurality of contents registered in the link table based on the output mode stored in the mode setting and switching unit, and outputting the content to a predetermined output device.

3. The information reading/output device according to Claim 2, wherein:
the conversion unit further converts the dot pattern read out by the reading unit into coordinate information;
the link table registers predetermined coordinate information instead of the content code by associating with the plurality of contents;
the control unit further controls output of a content by searching the predetermined coordinate information, that is registered in the link table, at the position closest to the coordinate information within a predetermined distance, and selecting at least one content from the plurality of contents associated with the predetermined coordinate information based on the output mode stored in the mode setting and switching unit.

4. The information reading/output device according to Claim 2, wherein the link table and/or the storage unit is set in a predetermined server on a network.

5. The information reading/output device according to Claim 2, wherein:
the link table comprises the first subtable that stores contents by a registering order of the plurality of contents, Japanese alphabetical order, English alphabetical order, or an order that sorts out details and attributes of the contents as modes according to a predetermined method, and the first subtable registers the plurality of contents by sorting the plurality of contents according to any one of the orders;
the conversion unit further converts the dot pattern read out by the reading unit into an order code; and
the control unit, instead of the output mode stored by the mode setting and switching unit, selects one order from the subtable in accordance with the order code, and further controls an order of outputting the plurality of contents according to the selected one order.

6. The information reading/output device according to Claim 2, wherein:
the link table further comprises the second subtable to which the plurality of contents are sorted and registered according to output time and predetermined elapsed time;
the control unit comprises a timer that measures reading time during which the reading unit reads out a dot pattern and predetermined elapsed reading time, and controls output by referring to the reading time or the elapsed reading time and the output time or the predetermined elapsed time of the second subtable and selecting at least one content sorted in the second subtable.

7. The information reading/output device according to Claim 2, wherein:
the link table further comprises a third subtable in which the one code information is divided into a plurality of subcodes and the plurality of contents are associated with the plurality of subcodes respectively and registered;
the control unit controls of outputting a selection screen of the plurality of contents on a display unit by referring to the output mode or the third table, selecting at least one content corresponding to the one subcode from the third subtable according to any one of instructions input by the input unit that receives instructions from user, and outputting the content to a predetermined output device.

8. The information reading/output device according to either Claim 1 or 2, wherein the control unit controls simultaneous output of at least two contents.

9. The information reading/output device according to Claim 2, wherein:
the link table registers content output instruction information that instructs an order of outputting the plurality of contents by associating with the content code and output mode as one of the variety of instructions; and
the control unit controls of outputting to a predetermined output device according to an order of outputting the plurality of contents based on the output instruction information.

10. The information reading/output device according to Claim 2, wherein:
the mode setting and switching unit, instead of the mode code, sets, switches, and stores the output mode according to the instruction input by the input unit that receives instructions from a user.

11. The information reading/output device according to Claim 2, wherein:
the storage unit stores a text, a sound, a video image, a URL, multimedia and the like and/or a variety of instructions input by the input unit that receives instructions from a user as a new content; and
the information reading/output device further comprises a link unit that newly registers the new content to the link table by associating with an output mode and one content code converted by the conversion unit from a dot pattern read out by the reading unit when the storage unit stores the new content.
